# EUROPEAN PATENT SPECIFICATION

(11) **EP 1 972 651 B1**
(45) Date of publication and mention of the grant of the patent: **26.12.2012**
(21) Application number: 07006067.8
(22) Date of filing: 23.03.2007
(51) Int. Cl.: C08J 3/02, C08J 3/09, C08F 2/32, B01J 13/00, B01J 13/16

(54) **Nanocapsules and process for their production**
Nanokapseln und Herstellungsverfahren dafür
Nanocapsules et leur processus de production

(43) Date of publication of application: 24.09.2008
(73) Proprietor: Universität Ulm, 89081 Ulm (DE)
(72) Inventor: Landfester, Katharina, Prof. Dr., 89075 Ulm (DE); Ziener, Ulrich, 89075 Ulm (DE); Crespy, Daniel, 55118 Mainz (DE)
(74) Representative: Pfenning, Meinig & Partner GbR

(56) References cited:
- WU DAN ET AL: "Aqueous-core capsules via interfacial free radical alternating copolymerization" MACROMOLECULES; MACROMOLECULES AUG 22 2006, vol. 39, no. 17, 22 August 2006 (2006-08-22), pages 5848-5853, XP002453191
- PAIPHANSIRI UMAPORN ET AL: "Polymeric nanocapsules containing an antiseptic agent obtained by controlled nanoprecipitation onto water-in-oil miniemulsion droplets" MACROMOL. BIOSCI.; MACROMOLECULAR BIOSCIENCE JAN 5 2006, vol. 6, no. 1, 5 January 2006 (2006-01-05), pages 33-40, XP002452918
- LANDFESTER K ET AL: "PREPARATION OF POLYMER PARTICLES IN NONAQUEOUS DIRECT AND INVERSE MINIEMULSIONS" MACROMOLECULES, ACS, WASHINGTON, DC, US, vol. 33, no. 7, 4 April 2000 (2000-04-04), pages 2370-2376, XP000932487 ISSN: 0024-9297
- HOLTZE CHRISTIAN ET AL: "A novel route to multiphase polymer systems containing nano-droplets: Radical polymerization of vinylic monomers in gelled water-in-oil miniemulsions" MACROMOL. MATER. ENG.; MACROMOLECULAR MATERIALS AND ENGINEERING OCT 20 2005, vol. 290, no. 10, 20 October 2005 (2005-10-20), pages 1025-1028, XP002452919
- CRESPY DANIEL ET AL: "Polymeric nanoreactors for hydrophilic reagents synthesized by interfacial polycondensation on miniemulsion droplets" MACROMOLECULES; MACROMOLECULES MAY 1 2007, [Online] vol. 40, no. 9, 1 May 2007 (2007-05-01), pages 3122-3135, XP002452917 Retrieved from the Internet: URL:http://pubs.acs.org/cgi-bin/abstract.c gi/mamobx/2007/40/i09/abs/ma0621932.html> [retrieved on 2007-09-27]

## Description

The present invention refers to a process for producing nanocapsules having a core comprising a hydrophilic liquid phase by polycondensation, polyaddition or anionic polymerisation in inverse miniemulsion. Furthermore, the present invention also refers to nanocapsules having a core comprising a hydrophilic liquid phase and a polymeric capsule encapsulating the liquid phase. These nanocapsules are in particular used as carrier for catalysts.

The synthesis of hollow polymeric capsules with sizes ranging from 50 nm to 50 µm has an intense interest in materials science. They offer unique properties as nano- or microreactors and are suitable materials for drug delivery systems. There are generally two approaches to make hollow polymeric particles, which can be differentiated by the presence or absence of a sacrificial core. In the first method (Caruso, F. Adv. Mater. 2001, 13, 11-22), a core particle is used as template and therefore coated with a polymeric shell. The coating of the sacrificial core is obtained by adsorption of a preformed polymer or by polymerization on the surface of the core. Subsequently the core is removed by chemical or physical means as dissolution or calcination. The technique of formation of a polymeric shell by adsorption on a sacrificial core comprises the layer-by-layer technique, putting alternatively polyelectrolytes or nanoparticles of opposite charges on a mineral or organic sacrificial core. This method was used for capsule diameters ranging from 70 nm to 10 µm. The thickness of the capsule wall is simply controlled by the number of cycles of the layer-by-layer deposition

Obviously, the techniques that do not use a sacrificial core are more suitable since they need less steps for the synthesis. In this case, the shell formation is driven by self-assembly or by surface tension forces. Thus, capsules can be made by the "ouzo effect" (Ganachaud, F.; Katz, J. L. ChemPhysChem 2005, 6, 209), the self-assembly of block copolymers (Wong, M.S.; Cha, J. N.; Choi, K.; Deming, T. J.; Stucky, D. Nano Lett. 2002, 2, 583-587), the photopolymerization of a monomer in phospholipid liposomes (Lestage, D. J.; Urban, M. Langmuir 2005, 21, 4266-4267), cross-linking of polymerizable liposomes (Liu, S.; O'Brien, D. F. J. Am. Chem. Soc. 2002, 124, 6037-6042), or neutralization of a polymeric charged core (Pavlyuchenko, V. N.; Sorochinskaya, O. V.; Irvanche, S. S.; Klubin, V. V.; Kreichman, G. S.; Budto, V. P.; Skrifvars, M.; Halme, E.; Koskinen, J. J. Polym. Sci., Part A: Polym. Chem. 2001, 39, 1435-1449). Hollow particles were successfully obtained by phase separation during a suspension (~ 5 µm) (Okubo, M.; Konishi, Y.; Minami, H. Coll. Pol. Sci. 1998, 276, 638-642) or an emulsion polymerization process (0.2 - 1 µm) (McDonald, C. J.; Bouck, K. J.; Chaput, A. B.; Stevens, C. J. Macromolecules 2000, 33, 1593-1605). A particular seeded emulsion polymerization with the dynamic swelling technique gave hollow capsules because of the self-assembling of phase separated polymer (SaPSeP) at the interface with the aqueous medium (~2 µm) (Minami, H.; Kobayashi, H.; Okubo, M. Langmuir 2005, 21, 5655-5658). The same method allows the preparation of cured epoxy micron-sized hollow particles (Minami, H.; Okubo, M.; Oshima, Y. Polymer 2005, 46, 1051-1056). The well-known interfacial polycondensation technique can be applied also to dispersed systems. Thus, the microemulsion process was used for the microencapsulation of osmium tetroxide (Ley, S. V.; Ramarao, C.; Lee, A.-L.; Ostergaard, N.; Smith, S. C.; Shirley, I. M. Org. Lett. 2003, 5, 185-187), palladium(II) acetate and Pd(0) (20-250 µm) in a polyurea matrix (Pears, D. A.; Smith, S. C. Ald-richimica Acta 2005, 38, 23-33). The polyurea was synthesized by polycondensation at the interface of the oil droplets. However, the synthesis did not lead to hollow capsules, but rather to solid core particles.

Recently, the miniemulsion technique was found to be a suitable technique for the synthesis of well-defined nanocapsules because of the high stability of the droplets. Such stability ensures a copy 1:1 from the droplets to the final object (nanoparticle or nanocapsule). It was also found possible to create nanocapsules with an aqueous core with the direct use of a polymer instead of polymerizing monomers. Thus, our group reported on the synthesis of poly(methyl methacrylate) capsules by controlled nanoprecipitation of the polymer on stable droplets of an inverse minimeulsion (Paiphansiri, U.; Tangboriboonrat, P. Landfester, K. Macromol. Bioscience 2006, 6, 33-40). Several groups have reported that hydrophobic compounds could be efficiently encapsulated in thin shells made by free-radical polymerization (Tiarks, F.; Landfester, K.; Antonietti, M. Langmuir 2001, 17, 908-918; Rajot, I.; Bone, S.; Graillat, C.; Hamaide, Th. Macromolecules 2003, 36, 7484-7490; Luo, Y.; Zhou. X. J. Polym Sci., Part A : Polym. Chem. 2004, 42, 2145-2154). Torini et al. have described the encapsulation of hydrophobic compounds by interfacial polycondensation in miniemulsion (Torini, L.; Argillier, J. F.; Zydowicz, N. Macromolecules 2005, 38, 3225-3236). The process took place in a direct system (o/w) where the stable diisocyanate IPDI was reacted with the 1,6-hexanediol monomer at the interface of the droplets. The capsule morphology was not evidently shown. Scott and al. described an original synthesis of nanocapsules in direct miniemulsion via interfacial free-radical polymerization (Scott, C. ; Wu, D. ; Ho, C.-C.; Co, C. C. J. Am. Chem. Soc. 2005, 127, 4160-4161). A surface active initiator was used to start an alternating copolymerization between one monomer present in the dispersed oil phase and a monomer present in the aqueous continuous phase. Breitenkamp and Emrick developed a method for the synthesis of larger capsules (~ 40 µm) made by cross-metathesis at the oil in water droplets interface (Breitenkamp, K.; Emrick, T. J. Am. Chem. Soc. 2003, 125, 12070-12071). Additionally, a completely different approach was recently reported by Im and al. (Im, S. H.; Jeong, U.; Xia, Y. Nature Materials 2005, 4, 671-675). First, polystyrene nanospheres were swollen with toluene to increase their volumes followed by freezing with liquid nitrogen. The freezing involves shrinkage of the particles and hence the creation of a void inside the particles due to the liquid to solid phase transition of toluene. The toluene is then evaporated below 0 °C, leaving a hole at the particle surface because of the flux of toluene. The final materials are hollow polystyrene nanocapsules. Up to now, there is only one report in the interfacial polycondensation in a miniemulsion system. Taira et al. recently described the trap and release of oligo-nucleotide using pH-responsive amphoteric particles (Taira, S.; Du, Y.-Z.; Kodaka, M. Biotechnology and Bioengineering 2006, 93, 396-400).

Therefore, it was an object of the present invention to provide a process for preparing nanocapsules which allow the encapsulation of hydrophilic liquid phases which is easy to handle. It was a further object of the present invention to provide nanocapsules as container for nanoparticles as well as nanoreactors which allow the encapsulation of precursors which can be chemically converted in the nanocapsule.

This object is solved by the process having the features of claim 1 and the nanocapsules having the features of claim 19. In claim 24, an inventive use of the nanocapsules is provided. The further dependent claims show preferred embodiments of the invention.

According to the invention, a process for producing nanocapsules having a core comprising a hydrophilic liquid phase by polycondensation, polyaddition or anionic polymerisation in inverse miniemulsion is provided. This process comprises the following steps:
a) providing an inverse miniemulsion comprising
   a1) as an emulsified phase a monomer (M1) or polymer (P1) being at least partially dissolved in a solvent (S1) ;
   a2) as a continuous phase a solvent (S2), wherein the solvent (S2) is more hydrophobic than the solvent (S1) ; and
   a3) a surfactant for stabilising the inverse miniemulsion;
   wherein hydrophilic droplets of the emulsified phase are formed in the continuous phase;
b) adding to the continuous phase a monomer (M2) being polymerisable or copolymerisable with the monomer (M1) or polymer (P1), wherein the monomer (M2) is at least partially soluble in the continuous phase; and
c) performing a polycondensation, a polyaddition or an anionic polymerisation at the surface of the hydrophilic droplets for encapsulation of the hydrophilic droplets.

The monomer (M1) is preferably selected from the group consisting of linear or branched primary or secondary amines, alcohols or thiols having one or more functionalities, and mixtures thereof.

In case of a polyaddition, preferably linear or branched alkylacrylates are used as monomers in the presence of a nucleophilic initiator. This initiator is preferably an initiator comprising one or more hydroxyl groups.

The polymer (P1) is preferably selected from the group consisting of linear or branched polyols, polyamines, and mixtures thereof.

The solvent (S1) is preferably selected from the group consisting of water, formamide, acetamide, dimethyl formamide, dimethyl acetamide, dimethyl sulfoxide, and mixtures thereof.

The solvent (S2) is preferably selected from the group consisting of cyclohexane, hexane, toluene, isoparaffines, alkanes, hydrophobic hydrocarbons, and mixtures thereof.

The surfactant is preferably selected from the group consisting of block-copolymers having hydrophilic and hydrophobic blocks, sorbitane ester of fatty acids, polyoxyethylene sorbitane ester of fatty acids, and mixtures thereof.

The second monomer (M2) is preferably selected from the group consisting of diisocyanates, diisothiocyanates, dicarboxylic acid halides, having all one or more functionalities and mixtures thereof. Thereby, it is preferred at first to dissolve said monomer (M2) in said solvent (S2) and to add this solution subsequently to the minimemulsion.

A further preferred embodiment refers to the use of ultrasound for preparing the minimemulsion.

In the case of a polycondensation or an anionic polymerisation, it is preferred to thermally initiate the reaction, wherein the reaction temperature is preferably from 20 to 100 °C. The reaction time is preferably in a range 0,5 to 24 h.

Furthermore, it is preferred to add a lipophilic additive to the emulsified face for stabilizing the inverse minimemulsion. The lipophilic additive can be any salt but is preferably selected from the group consisting of halides, sulfates, nitrates, carbonates and borates, e.g. of alkali metals and alkaline earth metals, halogen acid and mixtures thereof.

In a further preferred embodiment, the process comprises a further step d) which comprises a coating of the nanocapsules by polymerisation with a third hydrophobic monomer. The coating is preferably performed by radical polymerisation. In this case, the third monomer is preferably selected from the group consisting of N-Vinylcaprolactam, Vinylpyrrolidin, and mixtures thereof.

It is preferred to add further nanoparticles to the emulsified phase, wherein the nanoparticles are encapsulated such that the nanocapsules being containers for the nanoparticles.

A further preferred alternative refers to the addition of precursors of nanoparticles to the emulsified phase, wherein these precursors are encapsulated. Subsequently, the nanoparticles are formed out of the precursors reductively such that the nanocapsules act as nanoreactors.

The present invention provides for the first time the synthesis of hollow nanocapsules with an aqueous core and a shell made of polyurea, polythiourea or polyurethane as obtained in an inverse miniemulsion process. These nanoreactors are used for the reduction of silver nitrate to silver nanoparticles as model reactions. This is the first time that inorganic nanoparticles suspended in an hydrophilic phase are encapsulated in a hollow structure without the use of a sacrificial core.

The invention also provides nanocapsules having a core comprising a hydrophilic liquid phase and a polymeric capsule encapsulating the liquid phase.

The nanocapsules have preferably a diameter from 30 to 500 nm, more preferably from 50 to 400 nm and most preferably from 70 to 300 nm. The walls of the nanocapsules have preferably a thickness from 5 to 200 nm, more preferably from 10 to 150 nm and most preferably from 20 to 100 nm.

The inventive nanocapsules are dispersable in hydrophilic media.

The inventive nanocapsules can be used as carriers for catalysts.

The present invention is further described by the following examples and figures which do not limit the scope of the present invention to the embodiments shown therein.

Fig. 1 shows in a scheme the synthesis of the inventive nanocapsules and the optional use as nanoreactor.

Fig. 2 shows TEM micrographs of the samples P1 prepared with formamide as the liquid core in different resolutions.

Fig. 3 shows TEM micrographs of the sample P12 prepared with an aqueous core in different resolutions.

Fig. 4 shows a TEM micrograph of inventive polyurethane capsules from sample P7 of table 2.

Fig. 5 shows an SEM micrograph of inventive nanocapsules containing silver nanoparticles.

### Example 1

### 1.1 Synthesis of hollow nanocapsules

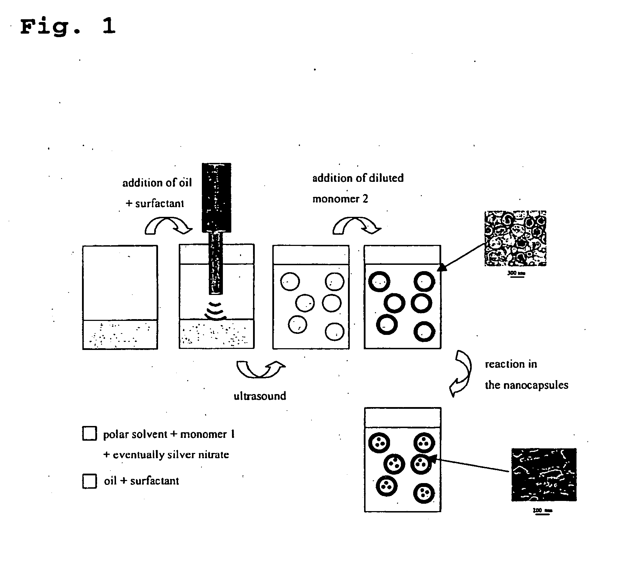

0.1 g of the amino-monomer or hydroxyl containing monomer or hydrophilic polymer (monomer 1), 1.3 g of the polar solvent in the droplets that form the liquid core, and 30 mg of NaCl were mixed at room temperature. This mixture was then added to a solution of a specific amount of the P(B/E-b-EO) surfactant in 7.5 g of the continuous phase (cyclohexane was used as non-polar phase if not otherwise mentioned). After stirring 1 h with a magnetic stirrer for pre-emulsification, the miniemulsion was prepared by ultrasonicating the mixture for 180 s at 70% amplitude (Branson sonifier W450 Digital, tip size 6.5 mm) with ice cooling in order to prevent polymerization. Then a defined amount of diisocyanate or diisothiocynate (monomer 2) dissolved in cyclohexane with 35 mg of P(B/E-b-EO) was added to the miniemulsion usually during 300 s, if not otherwise mentioned. The mixture was allowed to react for 2 h at 25 °C for the polyurea nanocapsules, and at 60 °C for the polyurethane, the cross-linking of starch or dextran, and the formation of the polythiourea nanocapsules. For the radical polymerization of 1-vinyl-2-pyrrolidone inside the nanoreactors, a controlled amount of this monomer and the initiator potassium persulfate (KPS) was added to the dispersed phase. For the reduction of silver nitrate in the nanocapsules, a specific amount of silver nitrate was added to the dispersed phase and acted as the lipophobe instead of the sodium chloride. Two different methods were chosen for the reduction of the silver ions: (i) 0.2 ml of hydrazinium hydroxide was added to the miniemulsion, or (ii) a macroemulsion containing 0.2 ml of hydrazinium hydroxide, 2 ml of cyclohexane, and 0.1 g of P(B/E-b-EO) was added to the miniemulsion. For both methods, the miniemulsion was ultrasonicated during the addition for 60 s with pulses of 5 s and pauses of 3 s at 70% amplitude (Branson sonifier W450 Digital, tip size 6.5 mm) with ice cooling and was kept overnight at 25 °C. Typical formulations of the latexes are shown in Table 1 and the overall synthesis of the capsules loaded with silver nanoparticles is schematically summarized in Fig. 1. The dispersion of the nanocapsules in water was obtained via the following way: 0.15 g of the synthesized latex dispersion was mixed with a solution of 5 mg of SDS in 6 g of water. The resulting mixture was ultrasonicated for 1 min at 70% amplitude (Branson sonifier W450 Digital, tip size 6.5 mm) with ice cooling. Then the weight of the dispersion was reduced by 10% by evaporation of the continuous phase and the cyclohexane and subsequently put in an ultrasonic bath for 5 min. This procedure was found to be more suitable than the traditional freeze-drying technique in order to re-disperse the nanocapsules. In the case of completely dried nanocapsules, the nanocapsules stuck irreversibly together.

**Table 1**

| Composition | | Polyurea nanocapsules | Polyurethane nanocapsules | Polythiourea nanocapsules |
|---|---|---|---|---|
| Dispersed phase | Polar solvent [g] | 1.3 | 1.3 | 1.3 |
| | Monomer 1 or polymer: hydrophilic [g] | 0.1 | 0.1 | 0.1 |
| | Lipophobe NaCl [g] | 0.03 | 0.03 | 0.03 |
| | or Lipophobe AgNO₃ [g] | 0.02 to 0.12 | | |
| Continuous phase | Apolar solvent [g] | 7.5 | 7.5 | 7.5 |
| | Surfactant P(B/E-*b*-EO) [g] | 0.075 | 0.075 | 0.075 |
| Second part of continuous phase | Apolar solvent [g] | 5 | 5 | 5 |
| | Surfactant P(B/E-*b*-EO) [g] | 0.035 | 0.035 | 0.035 |
| | Monomer 2: hydrophobic [g] | 0.25 | 0.28 | 0.30 |

### 1.2 Analytical methods

The particle sizes were measured by photocorrelation spectroscopy using a Nicomp particle sizer (model 370, PSS Santa Barbara, CA) at a fixed scattering angle of 90 °. The data were processed using the cumulants method. Further laser light scattering experiments were performed with an ALV-Instruments ALV/CGS-8F laser goniometer system and ALV-5000 multi-t digital correlator to determine the *R*_{g}/*R*ₕ ratio of the nanocapsules. The light source was a JDS Uniphase helium/neon 22 mW laser operating at λ = 633 nm. The correlation functions obtained were analyzed using the CONTIN program and the scattering angle was varied from 20 to 150°. Electron microscopy was performed with a Phillips 400T TEM operating at 80 kV. The miniemulsions were diluted in cyclohexane and then applied to a 400 mesh carbon-coated copper grid and left to dry. No further contrasting was applied. Scanning electron microscopy (SEM) micrographs were obtained with a DSM 962 SEM (Zeiss, Germany). Gravimetric measurements were performed with a Kern RH 120-3 gravimeter to measure the solid content of the latexes. The FT-IR measurements were performed to check the structure of the polymer with KBr pellets in a FTIR 113v Bruker spectrophotometer equipped with a DTGS detector using 100 signal-averaged scans at a resolution of 2 cm⁻¹. The solid used for the IR measurements was obtained by drying the miniemulsion for 96 h at 40 °C under vacuum, then washing the solid with water, hexane and drying the solid again. UV-Vis analyses were carried out with a Perkin-Elmer UV/Vis spectrometer Lambda 16. The latexes were 50 times diluted (w/w) in dried cyclohexane. Calorimetry was performed with a Micro Reaction Calorimeter µ-RC^{™} from THT. Samples of 0.5 ml of the miniemulsion were prepared and 280 µl of the diiso(thio)cyanate in cyclohexane and surfactant was subsequently added to study the kinetics of the reaction at 20 °C for the polyurea shell and at 60 °C for the polythiourea and the polyurethane shells. Reference experiments without diiso(thio)cyanate were performed to determine the contribution of the energy of mixing of the liquid added to the miniemulsion to the evolution of heat. Atomic Force Microscopy was performed during evaporation of the cyclohexane continuous phase with a soft cantilever in the contact mode (MFP-3D microscope, Asylum Research), after evaporation of the cyclohexane, after drying the latex deposited on the substrate in a desiccator for 12 h, and after submitting the latex deposited on the substrate to high vacuum for 10 min (all tapping mode). The sample was prepared either by dropping or by spin-coating a 10 wt.% diluted latex on mica substrates.

Nanocapsules were synthesized according to the procedure shown in Fig. 1. A solution of the first monomer in a hydrophilic solvent is miniemulsified by ultrasonication in a solution of surfactant in a hydrophobic solvent. The first monomer is then located in the droplets. A solution of the second monomer in the hydrophobic solvent is then added to the miniemulsion. The polymer is formed by polycondensation of the hydrophilic and the hydrophobic monomers. This should lead to the formation of capsules, however in some cases it does not as it will be discussed below. Additionally, it is possible to dissolve silver nitrate in the hydrophilic solvent prior to the miniemulsification. Miniemulsion droplets containing silver nitrate and the first monomer are then formed. The second monomer is subsequently added to the miniemulsion leading to the formation of a polymer followed by the introduction of a reducing agent, which reduces the silver nitrate to silver nanoparticles in the miniemulsion droplets.

As shown in Table 2, it was possible to synthesize nanocapsules in inverse miniemulsion, depending on the reagents used, but at fixed wt.% ratios of monomers compared to the dispersed phase. The P(B/E-*b*-EO) surfactant was found to stabilize efficiently the capsules in inverse miniemulsion against coalescence, while a little amount of NaCl was used as lipophobe since it is known to stabilize inverse miniemulsion latexes against Ostwald ripening when water is the dispersed phase. As shown in Table 2, we performed experiments with different dispersed phases.

**Table 2**

| Entry | Dispersed phase | | Continuous phase | | Object | Polymer | Diameter (nm) ** |
|---|---|---|---|---|---|---|---|
| | Solvent | Monomer 1 | Solvent | Monomer 2 | * | | |
| P1 | formamide | DET | cyclohexane | TDI | C | polyurea | 250 |
| P2 | formamide | DET | toluene | TDI | C + P | polyurea | 265 |
| P3 | formamide | DET | hexane | TDI | C | polyurea | 292 |
| P4 | formamide | DET | cyclohexane | TDIT | C | polythiourea | 377 |
| P5 | formamide | HMDA | cyclohexane | TDI | C | polyurea | 175 |
| P6 | formamide | cysteamine: 10wt.% DET: 90wt.% | cyclohexane | TDIT | C | polythiourea polyurea | 424 |
| P7 | formamide | glycerol | cyclohexane | TDI | C | PU | 203 |
| P8 | formamide | DBA | cyclohexane | TDI | C | polyurea | 281 |
| P9 | formamide | PEI | cyclohexane | TDI | C | crosslinked PEI | 571 |
| P10 | formamide | Starch | cyclohexane | TDI | C | crosslinked starch | 497 |
| P11 | water | DET | cyclohexane | HMDI | C | polyurea | 329 |
| P12 | water | DET | cyclohexane | TDI | C | polyurea | 216 |
| P13 | water | DAB | cyclohexane | TDI | C | polyurea | 354 |
| P14 | water | HMDA | cyclohexane | TDI | C | polyurea | 381 |
| P15 | water | L-arginine | cyclohexane | TDI | C | polyurea | 378 |
| P16 | water | Starch | cyclohexane | TDI | C | crosslinked starch | 524 |
| P17 | water | dextran | cyclohexane | TDI | C | crosslinked dextran | 324 |

| | | | | | | | |
|---|---|---|---|---|---|---|---|
| * P = particles, C = capsules, ** determined by DLS. | | | | | | | |

### 1.3 Variation of the wall thickness

We showed that it is possible to synthesize nanocapsules via interfacial polycondensation in inverse miniemulsion. We could vary the size of the capsules simply by changing the amount of surfactant in the formulation. It would be also interesting to vary the wall thickness of the nanocapsules, which would probably be a key parameter in the control of the release behavior of these nanocontainers. Because the monomers are the building material of the capsule wall, we studied the influence of the amount of monomer on the wall thickness of the capsules. It is expected that the larger the amount of monomers is, the thicker the wall of the capsules should be. The results shown in Table 4 indicate that the amount of hydrophilic monomer has an influence on the wall thickness of the nanocapsules. Conversely, the variation of the amount of hydrophilic (e.g. DET) or hydrophobic monomers (e.g. TDI) has no significant influence on the diameter of the nanocapsules. Table 4 shows that the concentration of the diethylenetriamine monomer in the droplets is the critical factor for the control over the wall thickness. In fact, for different amounts of diethylentriamine, the wall thickness is significantly varied from 15 nm for entry P22 to 39 nm for entry P18. The wall thickness can be then controlled simply by varying the amount of monomer in the formulation. It is observed that the wall thickness is much larger if the mass of monomer is increased in the miniemulsion formulation and that the nanocpasules still keep a spherical shape independently on the amount of monomers employed. The amount of diisocyanate does not play a significant role for the wall thickness: entries P1, P19, P20, and entries P21 and P22 have the same wall thickness. In fact, the loss of volume due to the use of less diisocyanate is compensated by the fact that the less cross-linked polyurea has more freedom to expand.

**Table 4**

| Entry | DET (g) | TDI (g) | Diameter (nm) * | Diameter in water (nm) * | Diameter (nm) ** | Wall thickness (nm) ** |
|---|---|---|---|---|---|---|
| P18 | 0.2 | 0.5 | 272 | 625 | 221 | 39 |
| P1 | 0.1 | 0.26 | 250 | 584 | 209 | 23 |
| P19 | 0.1 | 0.13 | 218 | 833 | 192 | 24 |
| P20 | 0.1 | 0.05 | 213 | 807 | 203 | 20 |
| P21 | 0.055 | 0.13 | 244 | 381 | 189 | 15 |
| P22 | 0.05 | 0.06 | 202 | 546 | 196 | 13 |

| | | | | | | |
|---|---|---|---|---|---|---|
| * determined by DLS; ** determined by TEM. | | | | | | |

### 1.4 Morphology of the capsules

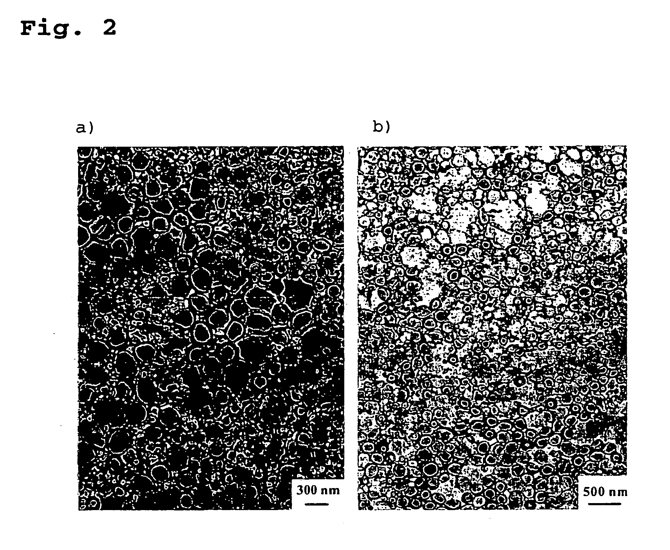

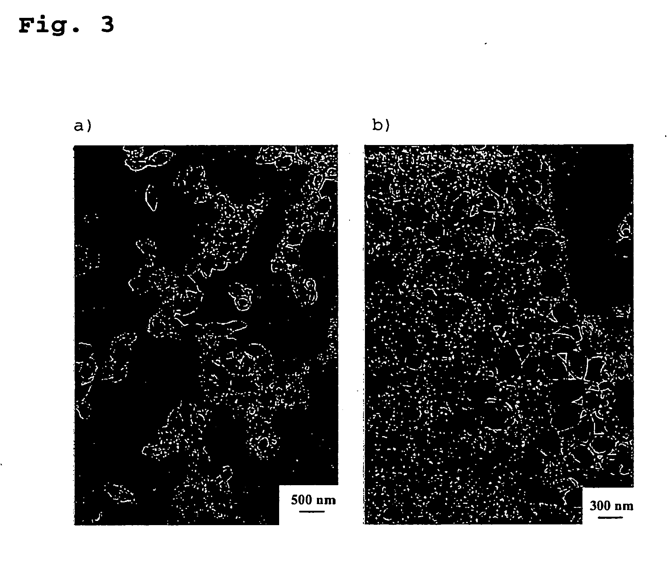

As shown in Fig. 2, the synthesized nanocapsules have a hollow structure detected by TEM with a thin polymeric wall. The nanocapsules with formamide as liquid core are spherical whereas some of the nanocapsules with water as the liquid core have a prolate spheroid shape (olive-shaped). As shown in Fig. 3, sample P12 with an aqueous core is composed of big non-spherical capsules and small spherical nanocapsules. The particles produced in heterophase polymerization processes are most often spherical since the system tends to minimize the interfacial energy between the two phases. One exception was reported in the case of miniemulsion polymerization of ε-caprolactam. Ellipsoidal particles of polyamide-6 were formed because of the phase separation that occurred in the miniemulsion droplets between the polyamide and the DMSO. Xu et al. reported that thin polymeric capsules can be irreversibly deformed during the process by the evaporation of the liquid core even for highly cross-linked capsules because they are more flexible than thick capsules. In our case, the nanocapsules formed with water are more deformable than those with formamide as dispersed phase. Indeed some of the isocyanate groups reacted with the water as revealed by the presence of urea groups in IR spectra, hence increasing the brittleness of the polymer.

We investigated further the structure of the polyurea nanocapsules with water as liquid core by AFM measurements because in the wet state they should not be deformed by any external forces. The measurements were taken in the presence of the cyclohexane as continuous phase, or after evaporation at room temperature, or after letting the deposited latex in a desiccator for 12 h, or finally submitting the deposited latex to vacuum for 10 min.

### 1.5 Dispersion in water

Up to now the capsules are dispersed in an organic solvent. A transfer to an aqueous dispersion would be suitable for eventual biomedical applications. The dispersion of nanocapsules in cyclohexane was taken and mixed with an aqueous solution of SDS. The mixture was treated in a sonication bath and then ultrasonicated during short time. The cyclohexane was then evaporated. This procedure was chosen in order to achieve a minimum size of the droplets of cyclohexane in the system. In fact, with such conditions, we can assume that the system is composed of droplets of cyclohexane with a minimum of nanocapsules per droplet down to one nanocapsule per droplet and empty cyclohexane droplets. If the size of the cyclohexane droplets would be bigger, the re-dispersion being provided by a standard stirring system, they would contain several nanocapsules. During the subsequent evaporation process of the cyclohexane, the droplets of cyclohexane shrink and would lead to coalescence of the nanocapsules. The procedure described in the experimental part is also preferable to the traditional freeze-drying technique since the nanocapsules tend to stick together upon removing of the continuous phase. The dispersion in water is accompanied by an increase of the hydrodynamic diameter, depending on the quality (nature) of the dispersed phase (see Table 4). The use of formamide as dispersed phase instead of water prevents subsequent hydrolysis of still non-reacted isocyanate groups. Hence, the capsules containing formamide are submitted to hydrolysis to amino-groups during the dispersion in water. These groups are highly hydrophilic and drive the capsules toward an expansion in water.

### Example 2

### Polythiourea and polyurethane capsules

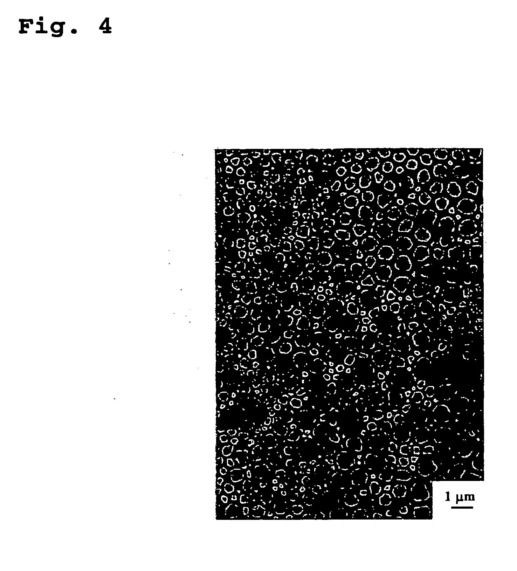

Polythiourea capsules containing formamide in the core were successfully obtained with the process discussed before for polyurea capsules (see Table 2). For the synthesis of polythiourea capsules, the tolylene-2,4-diisocyanate used for the formation of polyurea capsules was replaced by an equivalent molar amount of tolylene-2,4-diisothiocyanate (P4, P6); the choice of the amine is quite flexible. Similarly, polyurethane capsules were synthesized at 60 °C by using an equivalent molar amount glycerol instead of the diethylenetriamine monomer in the dispersed phase (P20). After the removal of the surfactant and the continuous phase, the polymers were identified by IR as polythiourea and polyurethane, respectively, free from urea groups. The IR spectra of polythiourea capsules showed characteristic bands at 3430, 3199, 1528, and 1265 cm⁻¹ whereas polyurethane capsules exhibited corresponding bands at 1720, 1540, and 1220 cm⁻¹. Remarkably, the polyurethane capsules formed monolayers while packing upon deposition of the miniemulsion on TEM grids as shown in Fig. 4. Additionally, it was shown by DLS measurements that the speed of cooling of the latexes has no influence on their stability.

### Example 3

### Polyureananocapsules as nanoreactors

Because of their hollow structure, the nanocapsules can be used as nanocontainers for reactions in hydrophilic media. We chose the reduction of silver nitrate in silver nanoparticles as model system to show that the polyurea capsules can be used as nanoreactors. The preparation of the silver nanoparticles loaded capsules involves the dissolution of silver nitrate in the dispersed phase followed by the polymerization of the shell. The metal salt is subsequently reduced by the addition of hydrazine to the miniemulsion under short ultrasonication, which diffuses through the thin capsule wall. Ultrasonication is used to facilitate the migration of the hydrazine through the cyclohexane to the capsules since the hydrazine is not soluble in cyclohexane continuous phase. To check the reactivity of hydrazine toward our dispersed phase, non-encapsulated droplets containing silver nitrate were reduced in a control experiment. We investigated then the formation of polyurea capsules followed by the reduction of the encapsulated silver nitrate by hydrazine. It was possible to prepare capsules loaded with different amounts of silver inside as shown in Table 5, simply by varying the concentration of the silver salt in the dispersed phase from 1.2 wt.% to 6.8 wt.% with respect to the dispersed phase. We chose hydrazine as reducing agent to guarantee a fast reducing process. Formamide is known as reducing agent for silver nitrate in certain systems, too, but we found that hydrazine was more suitable in our particular case.

**Table 5**

| Entry | AgNO₃ (mg) | Monomers | | Capsules diameter (nm) * | Capsules diameter (nm) ** | Ag NP diameter (nm) ** | Average number of Ag NP per capsule** |
|---|---|---|---|---|---|---|---|
| | | TDI (g) | DET (g) | | | | |
| P38-Ag | 20 | 0.25 | 0.1 | 221 | 208 ±38 | 24 ±2 | 1.08 |
| P39-Ag | 30 | 0.25 | 0.1 | 350 | 252 ±47 | 29 ±2 | 1.06 |
| P40-Ag | 30 | 0.25 | 0.1 | 378 | 277 ±52 | 33 ± 2 | 1.33 |
| P41-Ag | 30 | 0.37 | 0.15 | 249 | 171 ±32 | 27 ±2 | 1.07 |
| P42-Ag | 30 | 0.37 | 0.15 | 268 | 185 ±35 | 22 ±1 | 1.39 |
| P43-Ag | 60 | 0.25 | 0.1 | 391 | 239 ±45 | 14 ±1 | 6.06 |
| P44-Ag | 60 | 0.25 | 0.1 | 272 | 266 ±50 | 14 ±1 | 3.4 |
| P45-Ag | 60 | 0.38 | 0.16 | 290 | 274 ± 51 | 26 ± 1 | 1.44 |
| P46-Ag | 60 | 0.39 | 0.16 | 293 | 271 ±51 | 26 ± 2 | 3.78 |
| P47-Ag | 120 | 0.25 | 0.1 | 260 | 328 ± 61 | 16 ± 2 | 20.59 |

| | | | | | | | |
|---|---|---|---|---|---|---|---|
| * determined by DLS; ** determined by TEM. | | | | | | | |

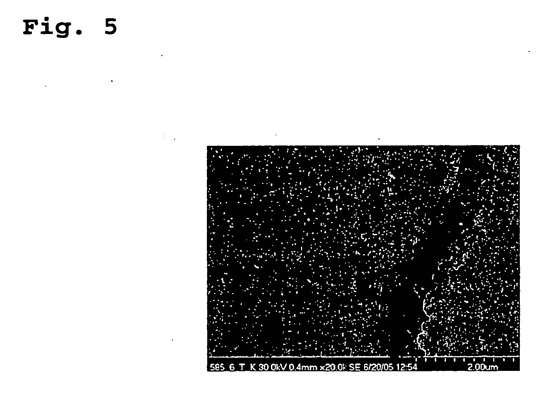

When the silver nitrate inside the polymer capsules is reduced, the spherical shape of the nanocapsules is not changed compared to the empty polyurea capsules as shown in Fig. 5 by SEM measurements.

The nanocapsules containing a high amount of silver nanoparticles were found to have a bigger size: 328 nm for sample P47-Ag containing 6.8 wt.% silver nitrate with respect to the dispersed phase, and 208 nm for sample P38-Ag containing 1.2 wt.% silver nitrate. In fact, it is expected that the PEO part of the block copolymer surfactant probably binds the silver ions. Such an interaction lowers the efficiency of the surfactant. For the low amounts of silver nitrate in the nanocapsules, the silver nanoparticles average size increases from 24 to 29 nm when the size of the polymeric nanocontainers increases from 208 to 252 nm. For a high amount of silver nitrate (≥ 60 mg), the number of silver nanoparticles increases from 6 to 21 while the size of the nanocontainers increases from 239 to 328 nm. In a general trend, the size of the capsules increases with the amount of silver nitrate. It has to be noted that no valid information about the size of the silver nanoparticles can be given by the DLS measurements. In principle, the silver nanoparticles may have a different coefficient of diffusion than the droplets surrounding them and a DLS program able to detect multimodal distribution of size could evidence this fact. But wide discrepancies in size observed between the DLS and the TEM measurements led to the conclusion that the DLS is not a suitable technique to measure the size of the silver nanoparticles in our particular case. This phenomenon could be explained by the fact that the synthesis of the silver nanoparticles was made without capping or stabilizing agent. The silver nanoparticles are probably stabilized by the polymeric wall of the capsules and hence reduce their mobility in the nanoreactors.

## Claims

1. A process for producing nanocapsules having a diameter from 30 to 500 nm and a core comprising a hydrophilic liquid phase by polycondensation, polyaddition or anionic polymerisation in inverse miniemulsion, comprising the following steps:
a) providing an inverse miniemulsion comprising
a1) as an emulsified phase a monomer (M1) or polymer (P1) being at least partially dissolved in a solvent (S1);
a2) as a continuous phase a solvent (S2), wherein the solvent (S2) is more hydrophobic than the solvent (S1); and
a3) a surfactant for stabilising the inverse miniemulsion;
wherein hydrophilic droplets of the emulsified phase are formed in the continuous phase;
b) adding to the continuous phase a monomer (M2) being polymerisable or copolymerisable with the monomer (M1) or polymer (P1), wherein the monomer (M2) is at least partially soluble in the continuous phase; and
c) performing a polycondensation, a polyaddition or an anionic polymerisation at the surface of the hydrophilic droplets for encapsulation of the hydrophilic droplets.

2. The process of claim 1,
wherein said monomer (M1) is selected from the group consisting of linear or branched primary or secondary amines, alcohols or thiols having one or more functionalities, and mixtures thereof.

3. The process of claim 1 or 2,
wherein linear or branched alkylacrylates are used in the polyaddition as monomers in presence of a nucleophilic initiator, in particular an initiator comprising one or more hydroxyl groups.

4. The process of one of the preceding claims,
wherein said polymer (P1) is selected from the group consisting of linear or branched polyols, polyamines, and mixtures thereof.

5. The process of one of the preceding claims,
wherein said solvent (S1) is selected from the group consisting of water, formamide, acetamide, dimethyl formamide, dimethyl acetamide, dimethyl sulfoxide, and mixtures thereof.

6. The process of one of the preceding claims,
wherein said solvent (S2) is selected from the group consisting of cyclohexane, hexane, toluene, isoparaffines, alkanes, hydrophobic hydrocarbons, and mixtures thereof.

7. The process of one of the preceding claims,
wherein said surfactant is selected from the group consisting of block-copolymers having hydrophilic and hydrophobic blocks, sorbitane ester of fatty acids, polyoxyethylene sorbitane ester of fatty acids, and mixtures thereof.

8. The process of one of the preceding claims,
wherein said monomer (M2) is selected from the group consisting of diisocyanates, diisothiocyanates, dicarboxylic acid halides, having all one or more functionalities and mixtures thereof.

9. The process of one of the preceding claims,
wherein at first said monomer (M2) is at least partially dissolved in said solvent (S2) and subsequently added to the miniemulsion.

10. The process of one of the preceding claims,
wherein the miniemulsion is produced by the effect of ultrasound.

11. The process of one of the preceding claims,
wherein a polycondensation or an anionic polymerisation is performed, which are thermally initiated and the reaction temperature is from 20 to 100 °C.

12. The process of one of the preceding claims,
wherein the reaction time is from 0,5 to 24 h.

13. The process of one of the preceding claims,
wherein a lipophobic additive, in particular compounds selected from the group consisting of halides, sulfates, nitrates, carbonates and borates of alkali metals and alkaline earth metals, halogen acid and mixtures thereof, is added to the emulsified phase for stabilising the inverse miniemulsion.

14. The process of one of the preceding claims,
wherein a further process step d) comprises a coating of the nanocapsules by polymerisation with a third hydrophobic monomer.

15. The process of Claim 14
wherein the coating is performed by radical polymerisation.

16. The process of claim 14 or 15,
wherein the third monomer is selected from the group consisting of N-Vinylcaprolactam, Vinylpyrrolidin, and mixtures thereof.

17. The process of one of the preceding claims,
wherein further nanoparticles are added to the emulsified phase, the nanoparticles being encapsulated such that the nanocapsules being container for the nanoparticles.

18. The process of one of the preceding claims,
wherein precursors for nanoparticles are added to the emulsified phase, these precursors being encapsulated, wherein subsequently nanoparticles are formed out of the precursors reductively such that the nanocapsules act as nanoreactors.

19. Nanocapsules having a diameter from 30 to 500 nm and a core comprising a hydrophilic liquid phase and a polymeric capsule encapsulating the liquid phase, **characterized in that** the nanocapsules are obtained by the process of one of the claims 1 to 18, wherein a polycondensation copolymerisation is performed in step c).

20. Nanocapsules of claim 18 or 19,
wherein the walls of the nanocapsules have a thickness from 5 to 200 nm.

21. Nanocapsules of claim 18 or 20,
wherein the nanocapsules are dispersable in hydrophilic media.

22. Use of the nanocapsules of claims 19 to 21 as a carrier for catalysts.

## Patentansprüche

1. Verfahren zur Herstellung von Nanokapseln mit einem Durchmesser von 30 bis 500 nm und einem Kern enthaltend eine hydrophile Flüssigphase durch eine Polykondensation, Polyaddition oder anionische Polymerisation in einer inversen Miniemulsion, bei dem
a) eine inverse Miniemulsion hergestellt wird, enthaltend
a1) als emulgierte Phase, ein Monomer (M1) oder Polymer (P1), welches zumindest teilweise in einem Lösungsmittel (S1) gelöst ist,
a2) als kontinuierliche Phase, ein Lösungsmittel (S2), wobei das Lösungsmittel (S2) hydrophober ist als das Lösungsmittel (S2),
a3) ein Tensid zur Stabilisierung der inversen Miniemulsion;
wobei hydrophile Tropfen der emulgierten Phase in der kontinuierlichen Phase gebildet werden;
b) ein mit einem Monomer (M1) oder Polymer (P1) polymerisierbares oder copolymerisierbares Monomer (M2) der kontinuierlichen Phase zugegeben wird, wobei das Monomer (M2) zumindest teilweise in der kontinuierlichen Phase löslich ist, und
c) eine Polykondensation, Polyaddition oder anionische Polymerisation an der Oberfläche der hydrophilen Tropfen zur Verkapselung der hydrophilen Tropfen durchgeführt wird.

2. Verfahren nach Anspruch 1, **dadurch gekennzeichnet, dass** das besagte Monomer (M1) ausgewählt ist aus der Gruppe bestehend aus linearen oder verzweigten primären oder sekundären Aminen, Alkoholen oder Thiolen, die eine oder mehrere Funktionalitäten aufweisen können, und Mischungen hiervon.

3. Verfahren nach einem der Ansprüche 1 oder 2, **dadurch gekennzeichnet, dass** lineare oder verzweigte Alkylacrylate in der Polyaddition als Monomer in der Gegenwart eines nukleophilen Initiators verwendet werden, insbesondere ein Initiator, welcher eine oder mehrere Hydroxylgruppen enthält.

4. Verfahren nach einem der vorhergehenden Ansprüche, **dadurch gekennzeichnet, dass** das besagte Polymer (P1) ausgewählt ist aus der Gruppe bestehend aus linearen oder verzweigten Polyolen, Polyaminen, und Mischungen hiervon.

5. Verfahren nach einem der vorhergehenden Ansprüche, **dadurch gekennzeichnet, dass** das besagte Lösungsmittel (S1) ausgewählt ist aus der Gruppe bestehend aus Wasser, Formamid, Acetamid, Dimethylformamid, Dimethylacetamid, Dimethylsulfoxid, und Mischungen hiervon.

6. Verfahren nach einem der vorhergehenden Ansprüche, **dadurch gekennzeichnet, dass** das besagte Lösungsmittel (S2) ausgewählt ist aus der Gruppe bestehend aus Cyclohexan, Hexan, Toluol, Isoparaffinen, Alkanen, hydrophoben Kohlenwasserstoffen, und Mischungen hiervon.

7. Verfahren nach einem der vorhergehenden Ansprüche, **dadurch gekennzeichnet, dass** das besagte Tensid ausgewählt ist aus der Gruppe bestehend aus Blockcopolymeren mit hydrophilen und hydrophoben Blöcken, Sorbitanester von Fettsäuren, Polyoxyethylen-Sorbitanester von Fettsäuren, und Mischungen hiervon.

8. Verfahren nach einem der vorhergehenden Ansprüche, **dadurch gekennzeichnet, dass** das besagte Monomer (M2) ausgewählt ist aus der Gruppe bestehend aus Diisocyanaten, Diisothiocyanaten, Dicarboxylsäurehalogeniden, und Mischungen hiervon.

9. Verfahren nach einem der vorhergehenden Ansprüche, **dadurch gekennzeichnet, dass** zunächst das besagte Monomer (M2) zumindest teilweise in dem besagten Lösungsmittel (S2) gelöst wird und dann der Miniemulsion zugesetzt wird.

10. Verfahren nach einem der vorhergehenden Ansprüche, **dadurch gekennzeichnet, dass** die Miniemulsion durch Ultraschalleinwirkung hergestellt wird.

11. Verfahren nach einem der vorhergehenden Ansprüche, **dadurch gekennzeichnet, dass** eine Polykondensation oder anionische Polymerisation durchgeführt wird, wobei diese thermisch initiiert werden und die Reaktionstemperatur im Bereich von 20 bis 100 °C liegt.

12. Verfahren nach einem der vorhergehenden Ansprüche, **dadurch gekennzeichnet, dass** die Reaktionszeit im Bereich von 0,5 bis 24 h liegt.

13. Verfahren nach einem der vorhergehenden Ansprüche, **dadurch gekennzeichnet, dass** der emulgierten Phase ein lipophober Zusatz, insbesondere Verbindungen ausgewählt aus der Gruppe bestehend aus Halogeniden, Sulfaten, Nitraten, Carbonaten und Boraten der Alkali- und Erdalkalimetalle, Halogenwasserstoffsäuren, und Mischungen hiervon, zur Stabilisierung der inversen Miniemulsion zugesetzt wird.

14. Verfahren nach einem der vorhergehenden Ansprüche, **dadurch gekennzeichnet, dass** in einem weiteren Schritt d) eine Beschichtung der Nanokapsel durch Polymerisation mit einem dritten hydrophoben Monomer durchgeführt wird.

15. Verfahren nach Anspruch 14, **dadurch gekennzeichnet, dass** die Beschichtung durch radikalische Polymerisation erfolgt.

16. Verfahren nach einem der Ansprüche 14 oder 15, **dadurch gekennzeichnet, dass** das dritte Monomer ausgewählt ist aus der Gruppe bestehend aus N-Vinylcaprolactam, Vinylpyrrolidon, und Mischungen hiervon.

17. Verfahren nach einem der vorhergehenden Ansprüche, **dadurch gekennzeichnet, dass** der emulgierten Phase zusätzlich Nanopartikel zugesetzt werden, wobei die Nanopartikel verkapselt werden, sodass die Nanokapseln als Container für die Nanopartikel fungieren.

18. Verfahren nach einem der vorhergehenden Ansprüche, **dadurch gekennzeichnet, dass** der emulgierten Phase zusätzlich Vorstufen für Nanopartikel zugesetzt werden, wobei die Vorstufen verkapselt werden, wobei anschließend reduktiv Nanopartikel aus den Vorstufen gebildet werden, sodass die Nanokapseln als Nanoreaktoren fungieren.

19. Nanokapseln mit einem Durchmesser von 30 bis 500 nm und einem Kern enthaltend eine hydrophile Flüssigphase sowie eine die Flüssigphase einschließende polymere Kapsel, **dadurch gekennzeichnet, dass** die Nanokapseln durch ein Verfahren gemäß einem der Ansprüche 1 bis 18 erhältlich sind, wobei in Schritt c) eine Polykondensation-Copolymerisation durchgeführt wird.

20. Nanokapseln nach einem der Ansprüche 18 oder 19, **dadurch gekennzeichnet, dass** die Wände der Nanokapseln eine Dicke im Bereich von 5 bis 200 nm aufweisen.

21. Nanokapseln nach einem der Ansprüche 18 bis 20, **dadurch gekennzeichnet, dass** die Nanokapseln in hydrophilen Lösungsmitteln dispergierbar sind.

22. Verwendung der Nanokapseln nach einem der Ansprüche 19 bis 21 als Trägersystem für Katalysatoren.

## Revendications

1. Procédé de fabrication de nanocapsules ayant un diamètre de 30 à 500 nm et un noyau comprenant une phase liquide hydrophile par polycondensation, polyaddition ou polymérisation anionique dans une mini-émulsion inverse, comprenant les étapes suivantes :
a) la mise à disposition d'une mini-émulsion inverse comprenant
a1) en tant que phase émulsifiée, un monomère (M1) ou un polymère (P1) au moins partiellement dissous dans un solvant (S1) ;
a2) en tant que phase continue, un solvant (S2), le solvant (S2) étant plus hydrophobe que le solvant (S1) ; et
a3) un tensioactif pour stabiliser la mini-émulsion inverse ;
des gouttelettes hydrophiles de la phase émulsifiée étant formées dans la phase continue ;
b) l'ajout à la phase continue d'un monomère (M2) qui est polymérisable ou copolymérisable avec le monomère (M1) ou le polymère (P1), le monomère (M2) étant au moins partiellement soluble dans la phase continue ; et
c) la réalisation d'une polycondensation, d'une polyaddition ou d'une polymérisation anionique à la surface des gouttelettes hydrophiles pour l'encapsulation des gouttelettes hydrophiles.

2. Procédé selon la revendication 1, dans lequel ledit monomère (M1) est choisi dans le groupe constitué par les amines primaires ou secondaires linéaires ou ramifiées, les alcools ou les thiols ayant une ou plusieurs fonctionnalités, et leurs mélanges.

3. Procédé selon la revendication 1 ou 2, dans lequel des acrylates d'alkyle linéaires ou ramifiés sont utilisés dans la polyaddition en tant que monomères en présence d'un initiateur nucléophile, notamment d'un initiateur comprenant un ou plusieurs groupes hydroxyle.

4. Procédé selon l'une quelconque des revendications précédentes, dans lequel ledit polymère (P1) est choisi dans le groupe constitué par les polyols linéaires ou ramifiés, les polyamines et leurs mélanges.

5. Procédé selon l'une quelconque des revendications précédentes, dans lequel ledit solvant (S1) est choisi dans le groupe constitué par l'eau, le formamide, l'acétamide, le diméthylformamide, le diméthylacétamide, le diméthylsulfoxyde et leurs mélanges.

6. Procédé selon l'une quelconque des revendications précédentes, dans lequel ledit solvant (S2) est choisi dans le groupe constitué par le cyclohexane, l'hexane, le toluène, les isoparaffines, les alcanes, les hydrocarbures hydrophobes et leurs mélanges.

7. Procédé selon l'une quelconque des revendications précédentes, dans lequel ledit tensioactif est choisi dans le groupe constitué par les copolymères séquences comprenant des séquences hydrophiles et hydrophobes, les esters de sorbitane d'acides gras, les esters de polyoxyéthylène sorbitane d'acides gras et leurs mélanges.

8. Procédé selon l'une quelconque des revendications précédentes, dans lequel ledit monomère (M2) est choisi dans le groupe constitué par les diisocyanates, les diisothiocyanates, les halogénures d'acides dicarboxyliques, ayant tous une ou plusieurs fonctionnalités, et leurs mélanges.

9. Procédé selon l'une quelconque des revendications précédentes, dans lequel ledit monomère (M2) est tout d'abord au moins partiellement dissous dans ledit solvant (S2), puis ajouté à la mini-émulsion.

10. Procédé selon l'une quelconque des revendications précédentes, dans lequel la mini-émulsion est produite par l'effet d'ultrasons.

11. Procédé selon l'une quelconque des revendications précédentes, dans lequel une polycondensation ou une polymérisation anionique est réalisée, qui sont initiées thermiquement et la température de réaction est de 20 à 100 °C.

12. Procédé selon l'une quelconque des revendications précédentes, dans lequel la durée de réaction est de 0,5 à 24 h.

13. Procédé selon l'une quelconque des revendications précédentes, dans lequel un additif lipophobe, notamment des composés choisis dans le groupe constitué par les halogénures, les sulfates, les nitrates, les carbonates et les borates de métaux alcalins et de métaux alcalino-terreux, les acides halogénés et leurs mélanges, est ajouté à la phase émulsifiée pour stabiliser la mini-émulsion inverse.

14. Procédé selon l'une quelconque des revendications précédentes, dans lequel une étape de procédé d) supplémentaire comprend un revêtement des nanocapsules par polymérisation avec un troisième monomère hydrophobe.

15. Procédé selon la revendication 14, dans lequel le revêtement est réalisé par polymérisation radicalaire.

16. Procédé selon la revendication 14 ou 15, dans lequel le troisième monomère est choisi dans le groupe constitué par le N-vinylcaprolactame, la vinylpyrrolidine et leurs mélanges.

17. Procédé selon l'une quelconque des revendications précédentes, dans lequel des nanoparticules supplémentaires sont ajoutées à la phase émulsifiée, les nanoparticules étant encapsulées de manière à ce que les nanocapsules constituent le contenant des nanoparticules.

18. Procédé selon l'une quelconque des revendications précédentes, dans lequel des précurseurs des nanoparticules sont ajoutés à la phase émulsifiée, ces précurseurs étant encapsulés, des nanoparticules étant ensuite formées à partir des précurseurs par réduction de manière à ce que les nanocapsules agissent en tant que nanoréacteurs.

19. Nanocapsules ayant un diamètre de 30 à 500 nm et un noyau comprenant une phase liquide hydrophile et une capsule polymère encapsulant la phase liquide, **caractérisées en ce que** les nanocapsules sont obtenues par un procédé selon l'une quelconque des revendications 1 à 18, une copolymérisation par polycondensation étant réalisée lors de l'étape c).

20. Nanocapsules selon la revendication 18 ou 19, où les parois des nanocapsules ont une épaisseur de 5 à 200 nm.

21. Nanocapsules selon la revendication 18 ou 20, où les nanocapsules sont dispersables dans les milieux hydrophiles.

22. Utilisation des nanocapsules selon les revendications 19 à 21 en tant que supports pour des catalyseurs.
